# EUROPEAN PATENT APPLICATION

(11) **EP 4 737 882 A1**
(43) Date of publication of application: **06.05.2026**
(21) Application number: 24210692.0
(22) Date of filing: 04.11.2024
(51) Int. Cl.: G01N 13/00

(54) **METHOD AND APPARATUS**

(71) Applicant: Apoha Limited, London NW6 6RJ (GB)
(72) Inventor: ST. JOHN, Alexander Nicholas, London, NW6 6RJ (GB); CARAMAZZA, Piergiorgio, London, NW6 6RJ (GB); BOEHMKE, Alexandra Leigh, London, NW6 6RJ (GB)
(74) Representative: Mathys & Squire

(57) **Abstract**

An aspect of the disclosure provides a method of characterising an analyte, the method comprising: providing a liquid system; administering, to the liquid system, a plurality of droplets wherein the droplets comprise the analyte; measuring, for each droplet of the plurality of droplets, an interface of at least one of (a) the droplet and (b) liquid system to provide a plurality of sets of interface behaviour data; determining, based on the sets of interface behaviour data, a variability of the interface behaviour; and determining a property of the analyte based on the variability of interface behaviour.

## Description

### Field of invention

The present disclosure relates to methods and apparatus for characterising an analyte, and more particularly for characterising an analyte based on the behaviour of an interface of a droplet or a liquid system to which the droplet is applied.

### Background

The surface of a material has a thermodynamic potential that is independent of its volume. The physical and chemical properties of a surface are derived from its thermodynamic potential. For example, the response of the surface to a mechanical perturbation is given by properties such as surface tension and lateral compressibility. Similarly, the response of the surface to an electromagnetic perturbation is given by properties such as surface dipole moment. As a result of these perturbation, different types surface waves may be generated on a surface e.g. a surface of a fluid (e.g. a liquid) forming an interface with another fluid (e.g. air). Some example types of surface waves are: Rayleigh waves; Gravity waves; Capillary waves; Lucassen waves. The physics of these waves have been described in Nonlinear fractional waves at elastic interfaces Julian Kappler, Shamit Shrivastava, Matthias F. Schneider, and Roland R. Netz Phys. Rev. Fluids 2, 114804 - Published 20 November 2017*.* These waves may be hydrodynamically coupled.

Rayleigh waves are characterised by elliptical motion of a notional fluid particle in a plane which is perpendicular to the surface at equilibrium and parallel to the direction of propagation of the wave.

Gravity waves are characterised by a displacement from equilibrium of a notional fluid particle at the surface wherein the displacement of the notional particle is characterised by having a restoring force of gravity or buoyancy.

Capillary waves are characterised by a displacement from equilibrium of a notional fluid particle wherein the displacement of the notional fluid particle is in a direction transverse to the surface at equilibrium and transverse to the direction of propagation of the wave and have a restoring force of surface tension.

Lucassen waves are characterised by a displacement from equilibrium of a notional fluid particle at a surface of a wave-medium by oscillation in a direction parallel to that surface at equilibrium and parallel to the direction of propagation of the wave. In Lucassen waves this notional particle is subject to a restoring force resulting from the surface elastic modulus of the surface of the wave-medium. Put another way Lucassen waves are compression-rarefaction waves which occur in the plane of a boundary (an interface) between a wave-medium and an adjacent medium such as air.

Lucassen waves have been observed in lipid monolayers and in other types of liquid systems.

*Shamit Shrivastava, Matthias F. Schneider Opto-Mechanical Coupling in Interfaces under Static and Propagative Conditions and Its Biological Implications* describes how a wave can be generated in a lipid monolayer mechanically with a dipper and how parameters of the generated wave, such as the intensity of fluorescent particles therein and the lateral pressure of the surface wave, can be measured, for example using a photo detector and a Wilhemly balance respectively.

Shrivastava S, Schneider MF. 2014 Evidence for two-dimensional solitary sound waves in a lipid controlled interface and its implications for biological signalling. J. R. Soc. Interface 11: 20140098 describes a method in which Lucassen waves can be generated in a lipid monolayer and how parameters of said waves may be measured (e.g. fluorescence energy transfer (FRET) measurements; a piezo cantilever). The document also describes how the state of a lipid monolayer may be characterised by a variety of thin film parameters (e.g. surface density of lipid molecules, temperature, pH, lipidtype, ion or protein adsorption, solvent incorporation, etc.) and also how the state of the lipid monolayer can affect parameters of waves which propagate in the lipid monolayer.

Bernhard Fichtl, Shamit Shrivastava & Matthias F. Schneider, Protons at the speed of sound: Predicting specific biological signaling from physics Nature Scientific Reports describes how Lucassen waves can be generated in a lipid interface in response to a change in pH of the system and that the speed of these waves can be controlled by the compressibility of the interface. The document describes how parameters of these waves depend on the degree of change in pH. The document also describes how mechanical and electrical changes at the lipid interface can be measured (e.g. using a Kelvin probe).

Lucassen waves may be described as interfacial compression waves and may be considered two-dimensional sound waves (sound waves confined to a surface which forms a boundary between two phases e.g. a fluidair boundary). In a manner analogous to sound waves, shock waves may exist in Lucassen wave systems (e.g. two-dimensional shock waves). Lucassen shock waves may be characterised in the same way as Lucassen waves with the additional constraint that the waves are characterised by changes in the wave medium which are nonlinear and/or discontinuous.

*S. Shrivastava, Shock and detonation waves at an interface and the collision of action potentials, Progress in Biophysics and Molecular Biology,* describes how Lucassen shock waves may propagate through a lipid interface.

WO2019234437A1 describes how a lipid interface may be used to transmit and receive signals.

Other liquid systems, including liquid systems which do not comprise any lipid interface, have been observed to exhibit related and different effects in response to the administration of droplets comprising analytes and test materials.

### Summary

Aspects of the invention are set out in the independent claims and optional features are set out in the dependent claims. Aspects of the disclosure may be provided in conjunction with each other and features of one aspect may be applied to other aspects.

One particular area of analysis has been the testing of analytes, including proteins, such as antibodies, where the analyte itself is in extremely short supply and there is a wish to determine properties, such as biophysical properties by using very small quantities (e.g. micrograms) of that analyte.

The present disclosure relates to methods of performing physical measurements and computer implemented methods of characterising an analyte based on measurement data obtained for that analyte.

The analytes may be delivered to a liquid system in a droplet. The analyte may be an antibody, such as a monoclonal antibody. The methods and apparatus described herein may provide methods of determining developability of such an antibody.

Monoclonal antibody (mAb) developability is an established and widely used parameter which refers to the ability of an mAb to remain stable, soluble, effective, and safe throughout its development, manufacturing, and clinical use. This ensures it can be formulated and administered successfully as a therapeutic product.

In an aspect there is provided a method of characterising an analyte, the method comprising:
providing a liquid system;
administering, to the liquid system, a plurality of droplets wherein the droplets comprise the analyte;
measuring, for each droplet of the plurality of droplets, an interface of at least one of (a) the droplet and (b) liquid system to provide a plurality of sets of interface behaviour data;
determining, based on the sets of interface behaviour data, a variability of the interface behaviour; and
determining a property of the analyte based on the variability of interface behaviour.

In an aspect there is provided a computer implemented method of characterising an analyte, the method comprising:
obtaining a plurality of sets of interface behaviour data for each droplet of a plurality of droplets administered to a liquid system wherein the droplets comprise the analyte and the interface data comprises measurements of an interface of at least one of (a) the droplet and (b) the liquid system;
determining, based on the sets of interface behaviour data, a variability of the interface behaviour; and
determining a property of the analyte based on the variability of interface behaviour.

The sets of interface behaviour data may be retrieved from a data store or received from a remote device - e.g. via a network message.

The interface behaviour data may be combined in a weighted linear combination. The weights can be learned based on antibodies of known properties. The weights may be provided by predictive data driven models. Variability can also be combined in these or other ways, for example the variability may be a higher order moment.

Determining variability may comprise identifying a time window interval in the interface behaviour data and determining, based on the sets of interface behaviour data, a variability of the interface data at each of a plurality of times within the window interval.

The interface behaviour data may comprise wave data, obtained from a wave evoked in the liquid system by the administering of the droplet.

The wave data may comprise a plurality of measurements of a polarisation of a reflected light beam, reflected by a surface of the liquid system in the presence of the wave.

The measurements of polarisation may comprise a first intensity of the reflected light beam, wherein the first intensity corresponds to a first polarisation component of the reflected light beam; a second intensity of the reflected light beam corresponding to second polarisation component of the light beam after reflection.

The interface behaviour data may comprise droplet data obtained from the droplet during a window interval between its formation at a dispenser and coalescence of the droplet with the liquid system.

The window interval may define a time between contact of the droplet with the liquid system and coalescence of the droplet with the liquid system.

The droplet data may comprise a time series indicating size of the droplet.

The variability may comprise a statistical measure of spread, such as a statistical moment, for example a variance or standard deviation.

The variability may comprise a measure of an envelope of the interface behaviour data.

The variability may comprise a measure of a change in the variability, such as a change in variability over a series of droplets.

The method may comprise combining the variabilities from each of the plurality of times to provide a combined variability metric, wherein the variability of interface behaviour is provided by the combined variability metric.

Determining the property of the analyte based on the variability may comprise comparing the variability of interface behaviour with variability of interface behaviour data of other analytes of the same type.

The comparing may comprise identifying an analyte as an outlier from a distribution of variability of interface behaviour.

The distribution of variability of interface behaviour may correspond to variability of interface behaviour data of other analytes of the same type.

The analyte may comprise a protein, such as an antibody.

In an aspect there is provided an apparatus for characterising an analyte, the apparatus comprising:
a liquid system comprising a surfactant and a buffer configured to interact to cause a transition in state of the liquid system;
a droplet dispenser, configured to administer droplets to the liquid system, the droplets comprising the analyte and the buffer;
an interface measurement detector, configured to measure an interface of at least one of the droplets and the liquid system in response to the administration of droplets to the liquid system to acquire interface behaviour data for each droplet of a plurality of droplets administered to the liquid system;
a controller configured to determine, based on the sets of interface behaviour data, a variability of the interface behaviour and to determine a property of the analyte based on the variability of interface behaviour.

The concentration of the buffer and/or the surfactant and content of the droplets may be selected so that the interface behaviour data exhibits an N-stable response to the addition of a droplet.

In an aspect there is provided an apparatus for characterising an analyte, the apparatus comprising:
a liquid system comprising a surfactant and a buffer configured to interact to cause a transition in state of the liquid system;
a droplet dispenser, configured to administer droplets to the liquid system, the droplets comprising the analyte and the buffer;
an interface measurement detector, configured to measure an interface of at least one of the droplets and the liquid system in response to the administration of droplets to the liquid system to acquire interface behaviour data for each droplet of a plurality of droplets administered to the liquid system;
wherein the concentration of the buffer and/or the surfactant and content of the droplets is selected so that the interface behaviour data exhibits an N-stable response to the addition of a droplet.

The surfactant may comprise an anionic surfactant.

The interface measurement detector may comprise a droplet sensor configured to measure droplet data indicating a size of the droplet.

The liquid system may comprise a non-equilibrium system at or near the point of a non-linear transition in state, such as a phase transition. The droplets may comprise material which affects this state, such as a buffer and/or a surfactant. Examples of buffer include PBS. Examples of surfactant include anionic surfactant.

The analyte may comprise a candidate for inclusion in a medicament, or for use in a method of medical treatment, and the property may comprise developability.

### Brief description of the drawings

Embodiments of the disclosure will now be described, by way of example only, with reference to the accompanying drawings, in which:
Figure 1 is a functional block diagram of an apparatus, which may be used to acquire measurement data for use in methods according to the present disclosure;
Figure 2 is a flowchart depicting a method of acquiring wave data by operation of an apparatus such as that shown in Figure 1;
Figure 3 shows examples of plots of interface data obtained using the apparatus and methods described herein;
Figure 4 illustrates distributions of variability data for examples of mAb that have been tested using the methods provided by the present disclosure and using methods described in published literature;
Figure 5 illustrates further such data, obtained from droplets, using the methods and apparatus described herein.

In the drawings like reference numerals indicate like elements.

### Specific description

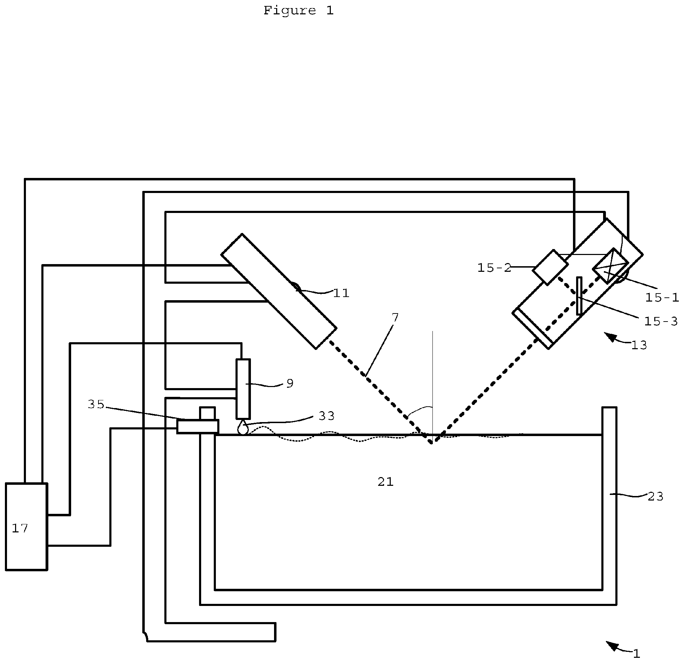

Figure 1 shows an apparatus 1 for characterising an interaction between a droplet of liquid 33 and a liquid system 3. The droplet may comprise an analyte and the apparatus may be configured to characterise the analyte based on data obtained from a series of such droplets.

Specifically, by administering a series of droplets and measuring an interface of the droplet or an interface of the liquid system (or both) the behaviour of that interface (or those interfaces), a plurality of sets of interface behaviour data can be provided.

This can enable a variability of the interface behaviour to be determined - i.e. the variability of behaviour between droplets of the same analyte rather than a comparison of behaviour between droplets of different analyte.

The experiments performed have demonstrated that variability of interface behaviour can be used to determine a property of an analyte and, specifically, to determine developability of an antibody. The performance of this approach has been found to compare favourably with prior art means of predicting developability.

The interface data which has been found to be useful includes both:
(a) wave data, obtained from measuring surface waves evoked in the liquid system by administration of the droplet, and
(b) droplet data, obtained from measurements of the droplet.

The apparatus 1 shown in Figure 1 comprises, a dispenser 9, light beam optics 11, a light collector 13, a detector 15, and a wave measurement module 17. As illustrated in Figure 1, the apparatus 1 also comprises a reservoir 23 holding a liquid system 3. The liquid system generally comprises a volume of liquid 21 which may have the liquid thin film at its surface. The reservoir 23 may be provided by a trough, such as a Langmuir trough.

The liquid system 3 generally comprises a solvent, such as water, in which certain materials are dispersed to provide a desired response of the liquid system, as described below. In one example, the liquid comprises a surface active agent such as a surfactant. One example of a useful surfactant is an anionic surface active agent. In addition, the liquid system also comprises a salt, such as a buffer. For example a phosphate buffer saline (PBS) may be added to the liquid system. The concentration of these materials in the liquid system may be selected to provide a bistable (or N-stable) response of the liquid system to droplets comprising the buffer and an analyte as described below.

Also shown in Figure 1 are mechanical fixtures 19 for holding the apparatus in position with respect to the reservoir 23, but it will be appreciated that these fixtures 19 are not essential and may be made and sold separately from the apparatus 1 itself. The wave measurement module 17 is connected to the dispenser 9 and to the detector 15 for the communication of control signals and data, it may also be connected to the light beam optics 11.

Where a thin film is present on the liquid system 3 the film may comprise a type of liquid which is different from that of the volume of liquid 21. Such a thin film is optional, but where a thin film is present liquid thin film and the volume of liquid 21 may therefore have an interface between them such as a liquid-liquid interface. The thin film may have viscoelastic properties.

These and other liquid systems may exhibit a variety of surface wave modes in response to stimulus. Examples of such wave modes comprise Rayleigh waves, gravity waves, capillary waves and Lucassen waves. Examples of types of liquid which provide the thin film include proteins and lipids and other types of liquid. It will be appreciated in the context of the present disclosure that such materials may also be held (e.g., dispersed in suspension or otherwise) in the volume of liquid and dynamic equilibrium may exist between the thin film and the material held in the volume of liquid 21. Examples of types of liquid which may provide the volume of liquid 21 comprise aqueous solutions.

The liquid system may be controlled, by the provision of salts and surfactants such as PBS, so that it is a non-equilibrium system at a non-linear transition in state. For example, this may be achieved by providing, in the liquid system a coupled reaction-diffusion-convection system. Such a coupled reaction-diffusion-convection system may be configured to provide nondeterministic behaviour.

One way to achieve this is by the inclusion, in the liquid system, of an anionic surfactant. Phosphate buffer saline (PBS) may be titrated into this liquid system to provide evolution of the nonequilibrium state of the system. The PBS may be titrated into the liquid system by inclusion in the droplets. To determine whether the liquid system is at the required concentration levels it is possible to provide test droplets to the liquid system from the dispenser and to observe the response of the liquid system. The liquid system has been found to operate in three regimes associated with the concentration of materials (such as surfactant and buffer) in the liquid system:
- in a first regime, where the concetration of surfactant and buffer is low, the interface data (e.g. wave data and droplet data) exhibits relatively low sensitivity to the inclusion in droplets of the analyte, effects may be discernible but signal power may be low;
- in a second regime, the response of the liquid system to droplets comprising analyte is seen to bifurcate, into a bistable or N-stable regime, at the appropriate buffer concentration. In this regime the liquid system may be at or near a phase transition, such as a transition in its surface tension response to the addition of surfactant;
- in a third regime, as the concentration of buffer and/or surfactant is increased, the response of the system may become unstable.

Without wishing to be bound by theory, it is believed that the nonequilibrium state diagrams of such a liquid system exhibits a transition point to nondeterministic behaviour. Interface data (such as wave data and/or droplet data) obtained when the liquid system is in this state may be particularly useful in reproducibly discriminating between different antibodies based on how they perturb the evolution of the pure PBS induced non-equilbrium state diagram.

The liquid system of the apparatus described herein may have concentration of the surfactant and or the buffer selected so that the response to the addition of droplets is in the second regime outlined above.

The light beam optics 11 comprise a source of polarised light arranged to illuminate an area of the liquid system 3 with a beam 7 having a selected angle of incidence α. The light beam 7 may also be coherent. Examples of suitable light sources include lasers and the light beam optics may comprise a polariser.

The light collector 13 comprises a detector 15 and is arranged to receive the beam of light 7 after reflection by the area of the liquid system and to provide the reflected beam of light to the detector. The light collector 13 is positioned so that the optical axis of the light collector 13 is directed to the area of the liquid system at the angle of specular reflection, α, of the light beam incident on the surface of the liquid system when it is undisturbed (e.g. flat and level at equilibrium).

The detector 15 is configured to sense parameters of the light received from the light collector 13 and to provide signals to the wave measurement module 17 including those parameters. Typically, those parameters comprise the polarisation of the light beam 7. For example the parameters may comprise a measure of the intensity of one or more polarisation components of the received light, such as the intensity of (a) an first component of the second polarisation and/or (b) a second component of the second polarisation. The second component may be orthogonal to the first component. The first component may be the s-component and the second component may be the p-component.

As illustrated, the detector 15 may comprise two light sensors 15-1, 15-2 and a beam splitter 15-3. The beam splitter 15-3 may provide a first polarisation component of the reflected beam to the first light sensor 15-1 and a second polarisation component to the second light sensor 15-2. The first light sensor 15-1 comprises a plurality of light sensitive detector elements. These elements are arranged at predefined positions relative to the expected beam direction (the undeflected beam). For example, the detector elements may be arranged as four quadrants of a circle centred on the expected beam direction. Because the detector is divided in this way, it is able to provide a signal indicating the position at which beam strikes the detector. For example, if all quadrants detect equal intensity, the beam deflection may be zero. The extent of beam deflection may be determined based on differences between the signal intensity detected in each quadrant. Such a detector may be capable of providing data indicating both the magnitude and the direction of deflection of the beam.

The dispenser 9 is positioned with respect to the liquid system 3 so that it can apply a droplet 33 to the liquid system. For example, the dispenser 9 may comprise a source of a test substance and may be configured to contact the surface of the liquid system 3 with a droplet 33 of the test substance to stimulate a wave in the liquid system. The dispenser may be configured to dispense droplets onto the liquid system at a selected rate - e.g. a selected volume flow rate of the droplet liquid.

The apparatus may comprise a droplet sensor 35. As illustrated in Figure 1, the droplet sensor 35 generally comprises an optical detector, such as a light beam arranged to illuminate a photodetector and positioned so that the droplets obstruct the light beam as they are dispensed onto the surface of the liquid system.

The data from the droplet sensor 35 may indicate the spatial extent of the droplet in amount of attenuation of the light beam caused by the droplet - a larger degree of attenuation being associated with a larger droplet. In this example, the data from the droplet sensor may also indicate the duration of the droplet at the surface in the duration of attenuation caused by each droplet. Other types of droplet sensor may also be used. For example, an imager such as a digital camera may be positioned to capture images of the droplet as it is provided to the liquid system. Regardless of how the droplet sensor 35 is implemented, it may provide a time series of data for each droplet indicating the size (e.g. spatial extent) of the droplet over time. This time series may span a window interval beginning with formation of the droplet at the dispenser or with contact between the droplet and the liquid system. This window interval may end with coalescence of the droplet with the liquid system.

Each droplet may create a wave 5 in the liquid system 3 exhibiting some or all of the above wave modes.

The wave measurement module 17 is configured to control the dispenser 9 to apply the droplet to the liquid system 3, and to operate the detector 15 to collect a time series of samples of the light received at the detector 15. These samples may comprise samples of the intensity of the one or more polarisation components and parameters of the liquid motion such as a measurement of the deflection and/or droplet parameters as mentioned above. A measure of deflection may be provided for each pair of polarisation measurements in a time series. The deflection measurements need not be of the same duration or the same timebase as the polarisation data. The wave measurement module may also be configured to determine parameters of contact. These parameters may comprise droplet data, such as the time series explained above which can be obtained from the droplet sensor 35 for each droplet. The droplet data may comprise parameters of contact such as data indicating a spatial extent of the droplet at the surface of the liquid system, and/or duration of contact between the droplet and the liquid system. Accordingly, it can be seen that the apparatus may provide, for each droplet, wave data both defining the wave itself with sufficient degrees of freedom that the various wave modes may be derivable from the data but also comprising further parameters of the liquid motion associated with that droplet. These parameters of liquid motion may indicate the deflection (e.g. angular deflection) of the surface at the measurement location and/or may comprise the droplet data.

Typically, the sample rate for the wave data (e.g. polarisation measurements) is at least 1MHz, for example 10MHz. The wave measurement module may also be configured to apply a low pass filter to the time series before down-sampling the data to 20kHz or thereabouts. Typically, the sample rate of the down-sampled time series is selected based on the size of the illuminated area and the expected speed of the wave in the thin film. For example, the expected speed may be approximately 1 ms⁻¹ and the illuminated area may have a diameter of ~5mm, in which case the upper limit on the frequency of surface waves that can be meaningfully sampled will be 10kHz. The sample rate of the down-sampled time series may be selected to ensure that the measurement remains well within this available bandwidth.

The wave measurement module 17 may be configured to control the timing of these samples based on the operation of the dispenser 9, for example so that the surface wave 5 in the area of the thin film illuminated by the beam 7 can be sampled at a selected time after the droplet and for a selected duration. The time and/or duration typically are selected based on the distance from the part of the liquid system 3 to which the droplet is applied to the illuminated area. The wave measurement module may be further configured to provide a particular sampling scheme for a particular measurement type.

The wave measurement module is configured to operate the droplet sensor to measure, for each droplet, the size of the droplet at the dispenser and during its coalescence with the liquid system. This may provide a measure of the behaviour of the interface(s) of the droplet (e.g. the surface of the droplet).

The wave measurement module is also configured to operate the wave sensor to measure, for each droplet, wave data, obtained from a wave evoked in the liquid system by the administering of the droplet. Typically, this wave data comprises a plurality of measurements of a polarisation of a reflected light beam, reflected by a surface of the liquid system in the presence of the wave. This may provide a measure of the behaviour of the interface of the liquid system (e.g. the surface of the liquid).

The wave measurement module is configured to acquire by these measurements, a plurality of sets of interface behaviour data. Each set may comprise the droplet data or the wavelet data, or both and may comprise samples of such data at each of a plurality of times within the window interval. The wave measurement module is configured to determine the variability of that interface data across the sets at each time.

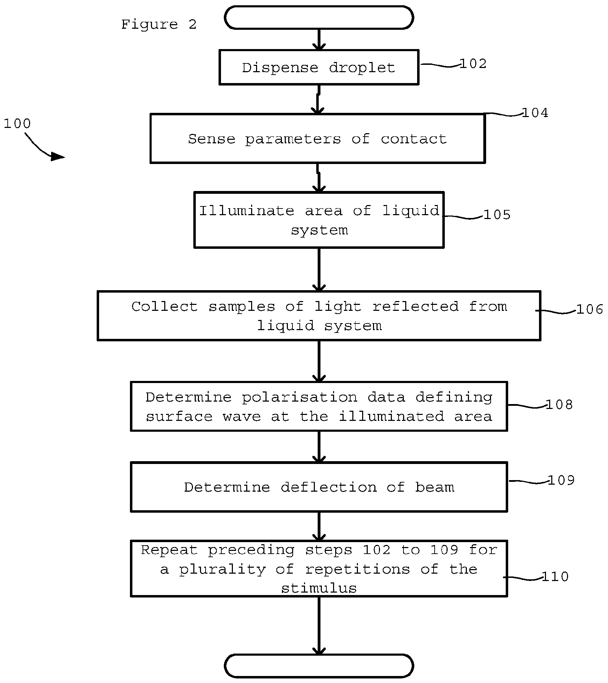

Figure 2 illustrates a method of operating the above apparatus to acquire wave data for an analyte.

As illustrated, the wave measurement module 17 operates the dispenser 9 to dispense 102 a droplet 33 to the liquid system 3. A droplet 33 is formed at a nozzle of the dispenser 9, adjacent to the surface of the liquid system 3.

The droplet sensor 35 provides a signal to the controller indicating the size of that droplet, which is encoded by the wave measurement module 17 in a time series of samples to provide droplet data 412. This time series of samples reflects the growth of the droplet at the dispenser until its contact with the liquid system 3.

Contact of the droplet 33 with the liquid 3 may trigger a surface wave 5 in the liquid system 3. The droplet sensor 35 continues to sense 104 the size of the droplet 33 to provide droplet data 412 as the droplet goes through the process of coalescence with the liquid system 3.

It can therefore be seen that, during administration of the droplet, the droplet data may provide parameters of the contact between the droplet 33 and the liquid system 3, such as the time taken for the droplet 33 to merge with the liquid system and/or the spatial extent of that droplet during its lifetime at the surface. This duration may correspond to the time between contact between the droplet and the surface of the liquid system and total coalescence of the droplet with the liquid system. This provides a set of droplet data for each droplet during an interval between formation of the droplet at the dispenser and coalescence of the droplet with the liquid system.

The wave measurement module 17 may be configured to identify contact of the droplet 33 with the liquid system based on a maximum in the droplet data (e.g. the signal from the droplet sensor 35 indicating that the droplet 33 has reached a maximum size). The wave measurement module 17 may be configured to select the droplet data 412 which corresponds to the window interval between contact and coalescence with the liquid system and to use that part of the droplet data to characterise the analyte. Coalescence in this context may be total coalescence or partial coalescence. The wave measurement module 17 may be configured to determine coalescence based the droplet size dropping below a minimum size (e.g. based on a threshold applied to the droplet data). It can therefore be seen that the time series of droplet data may be divided between a window interval that precedes contact with the liquid system and a window interval 400 which follows contact between the liquid system and the droplet.

The wave evoked by contact of the droplet 33 with the liquid system 3 the droplet travels outwardly, across the liquid system from the location at which the droplet is applied.

The light beam optics 11 illuminate 105 an area of the surface of the liquid at a measurement location spaced from the location at which the droplet is applied. The wave which propagates from the droplet to the measurement location reaches the measurement location a short time after the contact time.

The wave measurement module 17 operates the detector 15 to take a series of samples of the light beam 7 reflected by the illuminated area of the liquid and provided by the light collector 13 to the detector 15. Accordingly, the disturbance of the liquid system 3 at the measurement location as a function of time can be recorded in a series of samples of wave data (a time series) corresponding to the measured polarisation intensity at the surface of the liquid system. Each sample in that time series may comprise polarisation data, which may be in the form of the intensity of the s-polarisation component and the intensity of the p-polarisation component of the reflected light. The segmented detector may also provide 109 a time series of beam deflections associated with the time series of polarisation measurements.

The wave measurement module 17 may be configured to determine 108 an indication of the polarisation angle of the reflected beam 7, such as a ratio of the intensity of the s-component to the intensity of the p-component for each sample. The wave measurement module may derive features of the wave 5 in the liquid system from this time series. Examples of features of the respective wave modes include its amplitude, frequency content, phase velocity, group velocity, phase and so forth. The wave may comprise a Lucassen wave mode and other wave modes. The wave measurement module 17 may then use these features, such as features of the Lucassen wave, to provide information about the droplet. It will be appreciated in the context of the present disclosure that the change in polarisation caused by reflection by a thin film is related to the refractive index of that film. The wave measurement module 17 may also use the signal from the segmented detector to determine a magnitude and/or a direction of a deflection of the reflected beam and associate such deflection measurements with the polarisation measurements.

The apparatus may be configured to repeat 110 the foregoing steps (102 to 109 as illustrated in Figure 2) for a series of droplets. This may provide a set of time series of measurements, each time series corresponding to a wave, and each wave being generated by contact between the liquid and a droplet. This may generate wave data comprising a plurality of individual waveforms, each corresponding to the physical measurement of one wave, generated in the liquid by contact with the droplet of sample. Typically, the wave data 414 associated with each droplet comprises a waveform of pairs of polarisation intensity values and may also comprise corresponding deflection values. For example, a waveform provided by a time series of three-element tuples (first polarisation intensity, second polarisation intensity, and deflection). A series of droplets therefore provides a set of waveforms, each of which may provide a measurement of the physical wave in the liquid system having sufficient degrees of freedom to encode the relevant wave modes which make up that physical wave. The characterisation provided by the polarisation data may be further enriched by the measurement of deflection, because this may enable mechanical and other effects, such as effects caused reflection of the wave in the liquid back onto itself, to be accounted for in the data (e.g. by deconvolution or modelling or otherwise). Where other parameters of liquid motion are collected for the droplet then these may also be provided with the wave data for that droplet. For example, the droplet sensor 35 may provide a time series of droplet data 410 for each time series of the wave data, so that both the formation and coalescence of the droplet with the liquid system and the propagation of the wave itself are represented by the wave data and the droplet data together.

### Benchmarking

Biophysical properties of the clinical-stage antibody landscape, by Jain et al. (Applied Biological Sciences; 944-949, PNAS, January 31, 2017, vol. 114, no. 5) described studies of biophysical properties of 135 monoclonal antibodies mAb.

The apparatus described above was used to measure the same set of 135 mAbs used in the Jain et *al.* dataset to directly compare how well our methods correlate with mAb approval status. The results of these studies demonstrate that the methods and apparatus described herein provide a metric of developability which may perform as well as or better than the metrics presented in the Jain et *al.* publication. Significantly however, the methods described herein may use very small quantities of mAb and may produce reliable results from quick and simple measurements.

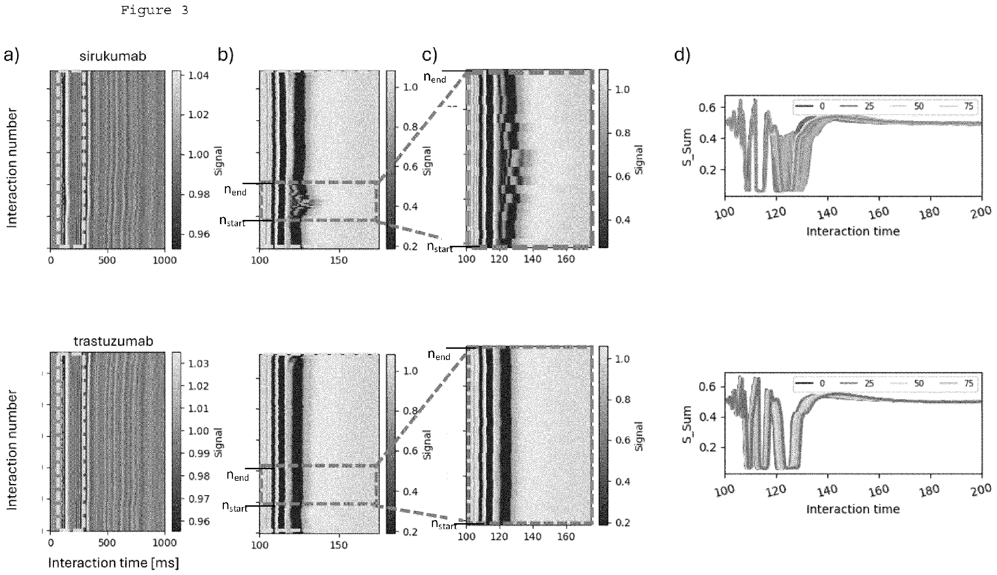

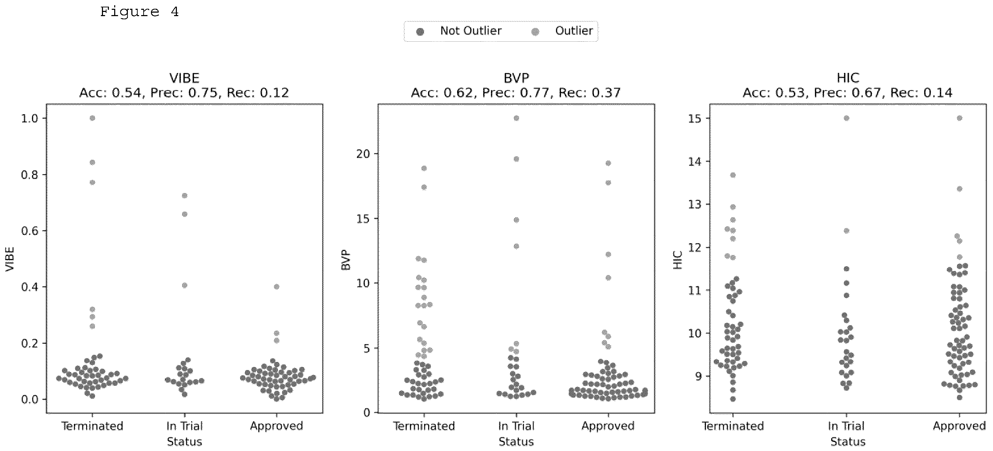

To measure mAb properties, 0.1 mg/ml mAb samples were dissolved in 1X PBS and deposited onto the liquid system 3 using a high-performance liquid chromatography (HPLC) system to provide droplets. In other words - the flow from the HPLC system was used to provide a dispenser as described above, which provides a series of droplets. These droplets emerge from the dispenser to be administered to the liquid system at a selected interval. Initially, in this study, the droplets (also referred to herein as interactions) contained only the mobile phase. The HPLC system was controlled so that the 'sample plug' reached the tip of the dispenser after a selected number of droplets, which is labelled on Figure 3b) as nₛₜₐᵣₜ. The sample plug was controlled so that after a selected number of further interactions the sample had been fully deposited. This is labelled on the y-axis of the plot in Figure 4)b as n_{end}. After n_{end} droplets had been deposited the dispenser continued to deposit further droplets of the mobile phase from the HPLC column. Waveforms at the surface of the liquid system (wave data) and the droplet data were monitored for all of these droplets using the arrangement described above. It will be appreciated in the context of the present disclosure that

Firstly, it is observed that the droplets which consist solely of mobile phase provide wave data that is very highly consistent between droplets and between different analytes. By contrast, during administration of the sample plug significant differences are observable between different analytes and different degrees of variability are also observed between successive interactions. Two examples of these observations are illustrated in Figure 3.

In Figure 3 a) two plots are shown. The x-axis of each plot is time, in milliseconds after administration of each droplet. The y-axis of each plot is interaction number, or droplet number. The colour scale on the plot indicates the signal amplitude. The upper plot in Figure 3a relates to a trial in which the analyte in the sample plug was a first antibody, sirukumab, and the lower plot in Figure 4b relates to a trial in which the analyte in the sample plug was a second, and different, antibody, trastuzumab.

Figure 3 b) also shows two "zoomed in" areas of the plots shown in Figure 3a, specifically to show the wave data during a window interval between 100ms and 170ms after each droplet was administered. The effect of analyte carrying droplets is clearly visible in this data beginning at n_{end} as being different from the preceding droplets. A second change is also discernible in this data at n_{end} and subsequent droplets. Again, the upper plot in Figure 3b relates to the first antibody and the lower plot relates to the second antibody, sirukumab. Figure 3c) shows a further zoomed in view of the plots for the same two antibodies, in which only the data from droplets beginning at nₛₜₐᵣₜ and ending at n_{end} is shown. This data is shown during a window interval between 100ms and 170ms.

Figure 3d shows, as overlaid line plots the same data which is shown in Figure 3c as a heatmap. In these line-plots in the y-axis corresponds to the signal amplitude and the x-axis is the time, in milliseconds after administration of each droplet. In these plots the spread (variability) of data between the different droplets for the two different antibodies is clearly visible, most particularly in the interval from 120ms to 140ms.

To further explore this effect, and to compare it with the results published by Jain et *al.* the set of 135 mAbs tested by Jain et *al.* were measured using the apparatus and method described above. This was done in batched experiments with three replica samples Aug 17-27 2024 and in three long runs with no replicas on Sept 6, 10, and 13.

Seven of these mAbs displayed behaviour which reflected that of the first antibody illustrated in Figure 3. It was found that those showing "sirukumab-like" behaviour were: sirukumab, urelumab, galiximab, fresolimumab, carlumab, lirilumab, and belimumab. Of these, three have a terminated approval status, one is approved, and three are still in phase-2 trials. This initial observation led to the hypothesis that this type of behaviour is associated with poor developability prospects.

The second antibody illustrated in Figure 3, trastuzumab, serves as an example of a low-variation mAb, which has been approved, and so represents good-developability characteristics. Its readouts exhibit subtle variations from interaction to interaction, characterized by small shifts that gradually increase throughout the sample measurement, as shown in Figure 3 (d).

Although its presence is discernible in the data, this second antibody's behaviour differs only slightly from the response of the trough to the deposition of the solvent, PBS. Water interactions show no shifting variation during a sample measurement, PBS interactions exhibit very minimal shifts, and trastuzumab-like mAbs show more shifting due to their stronger interaction.

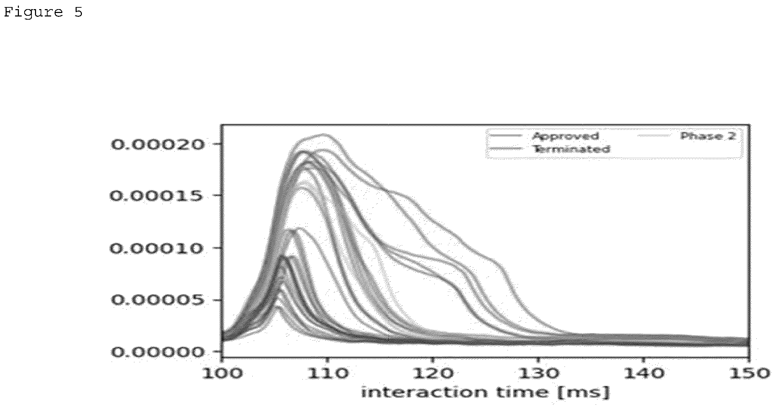

The method of the present disclosure comprises determining whether an analyte's behaviour is an outlier in a biophysical assay. This biophysical assay may be based on interface data, such as wave data or droplet data obtained by the instrument described above with reference to Figures 1 and 2. According to the present disclosure, a biophysical metric can be derived from this data. One example of such a biophysical metric is the variability of the interface data as described above. Other biophysical metrics derived from the interface data may also be used. The metric is used to establish, for mAb, a distribution of mAb. Figure 5 comprises three plots of three respective distributions for the mAb which were the subject of the study by Jain et *al.* These three distributions are each separated (see y-axis labels) according to whether the antibody is terminated, still in trials, or has been approved.

The three parameters used to generate these three distributions were
A) the variability of interface behaviour as described above;
B) the metric described as HIC by Jain et al. (see "An alternative assay to hydrophobic interaction chromatography for high-throughput characterization of monoclonal antibodies"; Estep et al. MAbs . 2015;7(3):553-61)
C) BVP Assay score (see Jain et *al.)*

The data established in the present study confirms that the outliers in a distribution of a biophysical parameter determined form interface behaviour correlate with terminated status in clinical trial. This biophysical parameter may be a metric which quantifies evolution of interface behaviour over a sequence of interactions (e.g. for a series of droplets). The metric chosen may provide an indication of variation between droplets of the same analyte. The variability metric described above is one way to do this.

Accordingly, the method of the present disclosure may comprise determining a metric from the interface data, such as the variability of interface behaviour for an analyte, and comparing that variability against a distribution of variabilities for other analytes of the same type. For example, the analyte may be an antibody, such as a monoclonal antibody, and the distribution may be variabilities of other antibodies/ monoclonal antibodies. In these examples, the method may comprise determining (e.g. predicting) the developability of the antibody based on whether the metric is an outlier from a distribution of that metric from a population of other antibodies. A candidate may be identified as an outlier when it is outside a selected percentile of the distribution, such as above the 90th percentile. In Figure 4, the accuracy, precision, and recall for each assay in predicting non-approved antibodies is displayed above each plot shown in Figure 4.

Any of the different types of interface data may be used to determine these metrics. For example, the wave data may provide a first and a second mode from each of the two polarisation components and/or a sum of those components. The droplet data may provide a third mode. Each mode may represent a different physical characteristic of the interaction between the droplet and the liquid system. A distribution, as explained above, may be derived for each of these different modes and determining whether a candidate is an outlier may be based on the number of modes in which it is flagged as an outlier.

Figure 5 shows line plots of interface data from the antibodies tested in the present disclosure for one of the above modes. It can clearly be seen in this data that there is a separation between approved and terminated antibodies.

It will be appreciated by the skilled addressee in the context of the present disclosure that the methods and apparatus explained herein may be implemented in a variety of different ways.

The wave at the area illuminated by the light beam can be detected by the wave measurement module as variations in the polarisation angle of the reflected beam, which can be observed in the (optionally filtered and down-sampled) time series of samples obtained from the illuminated area. This data may provide an indication of time varying disturbances in the density of the surface of the liquid system, thereby enabling Lucassen waves to be observed. This can enable parameters of the Lucassen waves such as their phase, amplitude, frequency content, phase velocity, group velocity and so forth. Embodiments permit measurement of how the polarization vector has changed upon reflection, e.g., how the direction of polarization has changed and also how the distribution of polarization has changed for example the extent to which a highly polarised beam becomes less polarised after interaction.

Further embodiments are envisaged.

For example, in some embodiments the droplet data may be used alone to characterise the analyte. For example, the droplet data may be used to determine a property of the analyte.

The array of droplet data may also be used with the wave data in the analysis described above.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure.

For example, the measure of the change in polarisation angle may be determined without the need to measure both components by measuring the change in one of the components caused by reflection and providing some adjustment to account for attenuation of the beam. The signal may be filtered and down sampled before determining the polarisation angle of the reflected beam, of the polarisation angle may be determined first. In some embodiments the two polarisation signals may be combined in the analogue domain prior to digitisation.

The liquid systems described herein may comprise thin films carried at their surfaces. Examples of thin film materials include lipids and proteins. Embodiments of the present disclosure do not need a thin film. Instead embodiments may have a simple liquid provided in a reservoir and a stimulus can be applied on the surface of a simple liquid. The liquid systems may comprise components selected according to the properties or expected properties of the analyte. For example, where the analyte is a protein, such as an antibody, material in the liquid system may be selected according to an interaction property of the antibody.

Wave measurement modules described herein may be coupled to the light collector and/or the detector which is coupled to the light collector, thereby to provide surface wave data to characterise a Lucassen wave in the liquid thin film based on the second polarisation.

Where ranges are recited herein these are to be understood as disclosures of the limits of said range and any intermediate values between the two limits.

With reference to the drawings in general, it will be appreciated that schematic functional block diagrams are used to indicate functionality of systems and apparatus described herein. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

In some examples the functionality of the wave measurement module 17 and other controllers and processing means described herein may be provided by any appropriate electronic logic such as digital logic and mixed analogue and/or digital processing and/or control functionality. This functionality may also be provided in a single integrated processing unit or it may be distributed between one or more devices. For example, the functions associated with the control of the apparatus illustrated in Figure 1 in actually acquiring the measurement data may be performed by the wave measurement module and the data analysis to characterise the analyte based on that measurement data may be performed by a separate data processor. Such controllers may comprise a general purpose processor, which may be configured to perform a method according to any one of those described herein. In some examples the controller may comprise digital logic, such as field programmable gate arrays, FPGA, application specific integrated circuits, ASIC, a digital signal processor, DSP, or by any other appropriate hardware. In some examples, one or more memory elements can store data and/or program instructions used to implement the operations described herein. Embodiments of the disclosure provide computer program products such as tangible, non-transitory storage media comprising program instructions operable to program a processor to perform any one or more of the methods described and/or claimed herein and/or to provide data processing apparatus as described and/or claimed herein. Such a controller may comprise an analogue control circuit which provides at least a part of this control functionality. An embodiment provides an analogue control circuit configured to perform any one or more of the methods described herein.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. These claims are to be interpreted with due regard for equivalents.

## Claims

1. A method of characterising an analyte, the method comprising:
providing a liquid system;
administering, to the liquid system, a plurality of droplets wherein the droplets comprise the analyte;
measuring, for each droplet of the plurality of droplets, an interface of at least one of (a) the droplet and (b) liquid system to provide a plurality of sets of interface behaviour data;
determining, based on the sets of interface behaviour data, a variability of the interface behaviour; and
determining a property of the analyte based on the variability of interface behaviour.

2. A computer implemented method of characterising an analyte, the method comprising:
obtaining a plurality of sets of interface behaviour data for each droplet of a plurality of droplets administered to a liquid system wherein the droplets comprise the analyte and the interface data comprises measurements of an interface of at least one of (a) the droplet and (b) the liquid system;
determining, based on the sets of interface behaviour data, a variability of the interface behaviour; and
determining a property of the analyte based on the variability of interface behaviour.

3. The method of claim 1 or 2 wherein determining variability comprises identifying a time window interval in the interface behaviour data and determining, based on the sets of interface behaviour data, a variability of the interface data at each of a plurality of times within the window interval.

4. The method of any preceding claim wherein the interface behaviour data comprises wave data, obtained from a wave evoked in the liquid system by the administering of the droplet, for example wherein the wave data comprises a plurality of measurements of a polarisation of a reflected light beam, reflected by a surface of the liquid system in the presence of the wave, for example wherein the measurements of polarisation comprise a first intensity of the reflected light beam, wherein the first intensity corresponds to a first polarisation component of the reflected light beam; a second intensity of the reflected light beam corresponding to second polarisation component of the light beam after reflection.

5. The method of any preceding claim wherein the interface behaviour data comprises droplet data obtained from the droplet during a window interval between its formation at a dispenser and coalescence of the droplet with the liquid system, for example wherein the window interval defines a time between contact of the droplet with the liquid system and coalescence of the droplet with the liquid system, for example wherein the droplet data comprises a time series indicating size of the droplet.

6. The method of any preceding claim wherein the variability comprises a statistical moment such as a variance or standard deviation.

7. The method of any of claims 1 to 5 wherein the variability comprises a measure of an envelope of the interface behaviour data.

8. The method of claim 6 or 7 wherein the variability comprises a measure of a change in the variability, such as a change in variability over a series of droplets.

9. The method of any preceding claim comprising combining the variabilities from each of the plurality of times to provide a combined variability metric, wherein the variability of interface behaviour is provided by the combined variability metric.

10. The method of any preceding claim wherein determining the property of the analyte based on the variability comprises comparing the variability of interface behaviour with variability of interface behaviour data of other analytes of the same type, for example wherein the comparing comprises identifying an analyte as an outlier from a distribution of variability of interface behaviour, for example wherein the distribution of variability of interface behaviour corresponds to variability of interface behaviour data of other analytes of the same type.

11. The method of any preceding claim wherein the analyte comprises a protein, such as an antibody.

12. The method of any preceding claim wherein the analyte comprises a candidate for inclusion in a medicament and the property comprises developability.

13. An apparatus for characterising an analyte, the apparatus comprising:
a liquid system comprising a surfactant and a buffer configured to interact to cause a transition in state of the liquid system;
a droplet dispenser, configured to administer droplets to the liquid system, the droplets comprising the analyte and the buffer;
an interface measurement detector, configured to measure an interface of at least one of the droplets and the liquid system in response to the administration of droplets to the liquid system to acquire interface behaviour data for each droplet of a plurality of droplets administered to the liquid system;
a controller configured to determine, based on the sets of interface behaviour data, a variability of the interface behaviour and to determine a property of the analyte based on the variability of interface behaviour.

14. The apparatus of claim 13 wherein the concentration of the buffer and/or the surfactant and content of the droplets are selected so that the interface behaviour data exhibits an N-stable response to the addition of a droplet.

15. The apparatus of claim 13 to 14 wherein the interface measurement detector comprises a droplet sensor configured to measure droplet data indicating a size of the droplet and/or wherein the interface measurement device comprises a detector configured to measure a wave evoked in the liquid system by the administering of the droplet, for example wherein the detector is configured to provide wave data based on a plurality of measurements of a polarisation of a reflected light beam, reflected by a surface of the liquid system in the presence of the wave.
